# EUROPEAN PATENT APPLICATION

(11) **EP 4 223 695 A1**
(43) Date of publication of application: **09.08.2023**
(21) Application number: 22155183.1
(22) Date of filing: 04.02.2022
(51) Int. Cl.: C01C 1/12, C01C 1/04

(54) **GREEN AMMONIA ABSORPTION COOLING**

(71) Applicant: Topsoe A/S, 2800 Kgs. Lyngby (DK)
(72) Inventor: KNUDSEN, Lari Bjerg, 2770 Kastrup (DK); SPETH, Christian Henrik, 3540 Lynge (DK); KRØLL JENSEN, Annette E., 3480 Fredensborg (DK); HAN, Pat A., 2765 Smørum (DK)
(74) Representative: Topsoe A/S

(57) **Abstract**

Ammonia synthesis process and plant comprising an ammonia synthesis converter and a downstream ammonia cooling system, wherein the ammonia synthesis converter is arranged to receive an ammonia synthesis gas comprising hydrogen and nitrogen and to produce an ammonia product gas stream and an off-gas ammonia stream; said ammonia cooling system comprising: - an ammonia evaporator for evaporating an ammonia liquid stream and generating an ammonia vapor stream; - an off-gas cleaning unit for cleaning said off-gas ammonia stream under the addition of water as a scrubbing agent, generating a water stream and an ammonia depleted off-gas stream; - an absorption cooling unit comprising water for cooling said ammonia vapor stream and collecting a condensed ammonia-water stream; - a regeneration unit for generating from said condensed ammonia-water stream: a purified water stream, said ammonia liquid stream, and an overhead ammonia gas stream.

## Description

The present invention relates to an ammonia cooling (refrigeration) system for the cooling of ammonia product gas from the ammonia synthesis converter of an ammonia synthesis plant or process.

A conventional, i.e. traditional, ammonia synthesis plant, as is well-known in the art, typically comprises a reforming section including a steam methane reforming unit and/or autothermal reforming unit for the catalytic steam reforming of a hydrocarbon feedstock, typically natural gas, or a hydrocarbon feed originated from renewable sources, thereby producing a raw synthesis gas which is then enriched in hydrogen and combined with nitrogen for producing the ammonia synthesis gas. The ammonia synthesis plant comprises therefore downstream an ammonia synthesis section e.g. an ammonia synthesis loop, including an ammonia synthesis converter where the ammonia synthesis gas is converted to the ammonia product gas stream.

In conventional ammonia synthesis plants, the so-called turndown ratio is about 100%. The turndown ratio, hereinafter also referred to as "turndown" is the ratio of operation at normal load, e.g. normal load of the upstream hydrocarbon feed, typically natural gas, used for generating the ammonia synthesis gas and thereby ammonia product gas, to the amount that the ammonia synthesis plant is capable of tolerating. Hence, in conventional ammonia synthesis plants, a turndown of for instance 10% is never considered because the natural gas supply is steady and thus at normal load, i.e. the turndown is 100%. However, for dynamic ammonia synthesis plants, such as green ammonia synthesis plants by which hydrogen of the ammonia synthesis gas is produced by water or steam electrolysis powered by electricity from renewable sources such as solar, wind or hydropower, the power input from thee sources may vary significantly during the day and during seasons, for which reason a turndown of for instance 10% load occurs frequently and thus becomes a problem which is highly relevant to address.

In conventional natural-gas based ammonia synthesis plants or processes, an ammonia cooling circuit is normally employed in order to condense the ammonia being produced. Hence, the produced ammonia is separated from the circulating ammonia synthesis gas by cooling/condensation. To avoid build-up of inerts in the plant, small amounts of ammonia containing gasses, i.e. an off-gas ammonia stream, are released from the plant and this stream is for environmental reasons treated in a washing tower and the absorbed ammonia recovered by distillation.

The well-known operating principle in the ammonia cooling circuit is the use of so-called mechanical refrigeration, whereby ammonia is evaporated at low pressure, thus producing low temperatures that in turn are utilized for cooling of the main process streams of the upstream ammonia synthesis plant. The liberated ammonia vapor is then compressed in a multistage ammonia compressor, for instance a multistage centrifugal compressor driven by a steam turbine, and the compressed vapor is condensed by means of cooling water or air in an ammonia condensing unit. The resulting liquid ammonia is then collected and re-utilized for cooling. For instance, in a standard, i.e. conventional, natural gas-based ammonia synthesis plant, there is normally provided an ammonia refrigeration compressor and ammonia recovery unit comprising two off-gas scrubbers and a distillation column.

Given that the cooling is is traditionally provided by a multistage cooling compressor operating on several pressure levels, this leads to an ammonia cooling circuit with a high energy efficiency at high loads, but also to a complicated layout and due to compressor limitations also a low efficiency at low loads (or low turndown ratios). This is a problem when the plant load varies significantly, and the compressor is steam driven. At full plant load, steam produced as a by-product in the ammonia plant will be produced in sufficient quantities to run the cooling compressor whereas at reduced load this is not possible. Thus, the generated heat from the ammonia synthesis converter of a conventional ammonia synthesis plant is normally removed in steam boilers and the generated superheated steam can be utilized in steam turbines for either driving the multistage compressor of the ammonia refrigeration circuit, or an alternator for generating power. However, the turndown of a steam turbine is lower than that for the ammonia synthesis plant e.g. the ammonia synthesis loop thereof. Therefore, a low load of the ammonia synthesis plant, e.g. below 50%, creates an unbalance between the produced steam in the ammonia synthesis plant and the steam used in the ammonia refrigeration circuit downstream, and thereby in how this steam is utilized in the steam turbine. This forces the stop of the steam turbine and the use of extra power for condensing the steam. A traditional steam turbine is operated with superheated steam and a steam superheater must be included as part of the steam generation section resulting in an increased capital expenses (CAPEX) and more complicated operation.

It is therefore an object of the present invention to provide a robust ammonia cooling system capable of withstanding varying loads in an ammonia synthesis plant due to fluctuating power supply, particularly in a green ammonia synthesis plant, i.e. where the hydrogen required for producing the ammonia synthesis gas is derived from electrolysis of water or steam powered by electricity from renewable energy sources.

This and other objects are solved by the present invention.

Accordingly, in a first aspect, the invention relates to an ammonia synthesis plant comprising an ammonia synthesis converter and a downstream ammonia cooling system, wherein said ammonia synthesis converter is arranged to receive an ammonia synthesis gas comprising hydrogen and nitrogen and to produce an ammonia product gas stream, wherein said ammonia synthesis plant is arranged to generate an off-gas ammonia stream, and wherein said ammonia cooling system comprises:
- an ammonia evaporator for evaporating an ammonia liquid stream and generating an ammonia vapor stream;
- an off-gas cleaning unit for cleaning said off-gas ammonia stream under the addition of water as a scrubbing agent (absorbing agent), generating a water stream and an ammonia depleted off-gas stream;
- an absorption cooling unit comprising water for cooling said ammonia vapor stream and collecting a condensed ammonia-water stream;
- a regeneration unit for generating from said condensed ammonia-water stream:
   a purified water stream,
   said ammonia liquid stream, and
   an overhead ammonia gas stream.

In an embodiment, the ammonia synthesis plant comprises a water or steam electrolysis unit for producing said hydrogen. Suitably, said electrolysis unit is being powered by electricity from renewable energy sources such as solar, wind or hydropower. Optionally, said electrolysis unit is driven by electricity from thermonuclear power.

The water electrolysis unit is an alkaline/polymer electrolyte membrane electrolysis unit i.e. alkaline/PEM electrolysis unit (alkaline cells or polymer cells units). For the purposes of the present invention, the term alkaline/PEM electrolysis unit means alkaline and/or PEM electrolysis unit. The steam electrolysis unit is a solid oxide electrolysis cell unit (SOEC unit). Operation with SOEC units is normally conducted at high temperatures (700-800°C), which often provides advantages over alkaline/PEM electrolysis, as the latter operates at much lower temperature, i.e. in the range 60-160°C. It would be understood that water is used for alkaline/PEM electrolysis, while steam is used for SOEC.

It would be understood, that the term "green ammonia absorption cooling" means the cooling of the ammonia product gas in the ammonia cooling system, where water or steam electrolysis is provided for producing the hydrogen.

It would also be understood, that, the term "green ammonia plant" or "green ammonia synthesis plant" means an ammonia synthesis plant which comprises water or steam electrolysis unit for producing hydrogen of the ammonia synthesis gas, and the electrolysis unit is being powered by electricity from renewable energy sources such as solar, wind or hydropower. Optionally, said electrolysis unit may also be powered by electricity from thermonuclear power.

It would be understood that the ammonia cooling system may encompass a closed circuit and thus it may for instance also be interpreted as an ammonia cooling circuit. The term "ammonia cooling circuit" may be used interchangeably with the term "ammonia refrigeration circuit".

The term "mechanical refrigeration" may be used interchangeably with the term "compressor driven cooling circuit" or "compressor driven ammonia cooling".

The term "ammonia evaporator" is used interchangeably with the term "ammonia chiller" or simply "chiller". It would also be understood that the term "an ammonia evaporator" or "a chiller", means one or more ammonia evaporators i.e. one or more chillers. Similar interpretation may apply for other units. For instance, the term "an absorption cooling unit" means one or more absorption cooling units.

Suitably, the ammonia cooling system comprises a plurality of ammonia evaporators, i.e. a plurality of chillers, such as two chillers, arranged in series. A chiller enables condensing out ammonia in the ammonia product gas and the provision of a plurality of chillers enable higher energy efficiency in the plant or process.

The term "off-gas cleaning unit" means a unit for removing ammonia from the off-gas. The off-gas cleaning unit is suitably a washing tower or scrubbing tower where a scrubbing agent is used to wash off the ammonia present in the off-gas. It would be understood that "scrubbing agent" may have the same meaning as "absorbing agent". The term "absorption cooling unit" is used interchangeably with the term "absorber".

The term "regeneration unit" is used interchangeably with the term "regenerator".

The term "load" means the percentage of hydrogen feed being used for conducting ammonia synthesis in the ammonia synthesis plant with respect to the load at normal operation (100% load). The ammonia production capacity of the plant is assumed directly proportional to the hydrogen feed being used. It would therefore be understood, that a 10% load means 10% hydrogen used for ammonia synthesis with respect to normal operation. The hydrogen used is from water (steam) electrolysis, as is well-known in the art. A 100% load corresponds to normal operation of the ammonia synthesis plant, where the natural gas supply is steady.

As already recited farther above, the term "turndown ratio", is also simply referred to as "turndown" and signifies the ratio of operation at normal load, e.g. normal load of the upstream hydrocarbon feed, typically natural gas, used for generating the ammonia synthesis gas and thereby ammonia product gas, to the amount that the ammonia synthesis plant is capable of tolerating. It would also be understood, that the term "normal load" or "normal operation" means conditions where the load is 100%. Hence, a load of 100%, i.e. normal load, corresponds to a turndown of 100%, while a load of 10% corresponds to a turndown of 10%.

The term turndown is also applicable to parts of the ammonia synthesis plant, such as units or equipment thereof. Accordingly, the term turndown is also applicable to for instance the steam turbine used for driving the compressor of a conventional ammonia refrigeration circuit. A turndown of e.g. 50% in the steam turbine means the ratio of operation at normal load to the amount that the steam turbine is capable of tolerating.

It has now been found that for an ammonia plant operating at widely different loads and fast load changes, such as green ammonia plants which operate solely on renewable energy sources, absorption cooling is advantageously adapted instead of mechanical refrigeration, since the ammonia cooling system can be designed with a better turn-town ratio than available in compressor operated cooling units and thus follow the general plant variations.

By the present invention absorption cooling is combined with off-gas cleaning, e.g. off-gas absorption, resulting in a cooling system layout with a considerably lower number of equipment units than in a traditional compressor driven cooling circuit plus a traditional off-gas cleaning unit.

While the use of absorption cooling for refrigeration in conventional ammonia synthesis plants is known, for energy saving reasons it has been normally been operated only for generating an ammonia water solution for the absorber in the required concentration. The present invention differs at least in that ammonia and water are separated into almost pure components. Hence, the ammonia cooling system is adapted for both producing purified water, i.e. ammonia-free water, as well as ammonia liquid, a part of which may be withdrawn as additional ammonia product.

The invention enables therefore replacing into one system a traditional compressor driven cooling circuit (i.e. mechanical refrigeration) and traditional off-gas absorption.

As used herein, the term "integration" means providing synergy when combining traditional stand-alone units or systems, such as by significantly reducing the resulting number of equipment units.

In an embodiment, in said ammonia cooling system:
- said ammonia evaporator is arranged to receive said ammonia liquid stream and a heat exchanging medium for evaporating said ammonia liquid stream, thereby generating said ammonia vapor stream;
- said off-gas cleaning unit is suitably an off-gas scrubbing unit, i.e. off-gas scrubber, arranged to receive: said purified water stream from said regeneration unit as the scrubbing agent and said off-gas ammonia stream, suitably also comprising said overhead ammonia gas stream from said regeneration unit, thereby generating said ammonia depleted off-gas stream and said water stream;
- said absorption cooling unit is suitably a mixing vessel containing water, arranged to receive said water stream and said ammonia vapor stream, for thereby generating and collecting said condensed ammonia-water stream; said absorption cooling unit further comprising a cooling device such as a coil arranged to receive a cooling medium such as water, and an outlet for withdrawing said condensed ammonia-water stream;
- said regeneration unit is a distillation column, i.e. an ammonia recovery distillation column, arranged to receive said condensed ammonia-water stream, and said regeneration unit comprising: an outlet for withdrawing as a bottom stream said purified water stream, an outlet for withdrawing and overhead ammonia stream and a separation unit, such as an ammonia recovery overhead drum, for separating from said overhead ammonia stream an overhead ammonia gas stream and said ammonia liquid stream.

As recited above, suitably, said off-gas ammonia stream also comprises the overhead ammonia gas stream from said regeneration unit. Hence, in an embodiment according to the first aspect of the invention there is also provided means such as a juncture or mixing unit for add-mixing said overhead ammonia gas stream to said off-gas ammonia stream. The thus combined stream is supplied to the off-gas cleaning unit.

Further integration is thereby achieved. For environmental reasons, any off-gas e.g. slip gases from the upstream ammonia synthesis plant or from the ammonia cooling system itself and which contain ammonia must be cleaned. The off-gas containing ammonia is scrubbed with purified water generated in the ammonia cooling system, more specifically as the bottom stream of the regenerator, for recovering ammonia and minimize slip of ammonia to atmosphere. The thus generated water stream from the off-gas cleaning unit is added to the absorption cooling unit e.g. mixing vessel, for then downstream recovering the ammonia as a product, as well as purified water which is sent back to the off-gas cleaning unit.

The ammonia present in the off-gas ammonia stream as well as in the overhead ammonia gas stream, is reduced down to a level otherwise not obtainable by traditional plants or processes and by which ammonia containing streams are left to the end user to dispose of, which is highly undesirable. By the present invention, the content of ammonia in the ammonia depleted off-gas stream from the off-gas cleaning unit is brought down to below 10 ppmv, such as 7 or 5 ppmv ammonia. The off-gas ammonia stream entering the off-gas cleaning unit may for instance contain 10-15% (mole %) ammonia, while the overhead ammonia gas stream may for instance contain 80-90% ammonia.

In an embodiment according to the first aspect of the invention, in said ammonia cooling system the heat exchanging medium of the ammonia evaporator is said ammonia product gas stream.

Thereby the ammonia cooling system may be fully integrated within the ammonia synthesis plant. Apart from green ammonia synthesis plants, where fluctuating power supply is inherent due to the intermittent nature of renewable sources such wind, solar or hydropower, the present invention is suitable also for the cooling of ammonia product gas of any ammonia synthesis plant with fluctuating power supply or with fluctuating hydrocarbon feed supply.

In an embodiment according to the first aspect of the invention, in said ammonia cooling system, said regeneration unit comprises an upper section (I) and a lower section (II);
said lower section (II) comprising:
   a power-driven heating device, and/or a reboiling unit arranged to receive a heat exchanging medium; and
   and an outlet for withdrawing as bottom stream said purified water stream;
said upper section (I) comprising:
   - an inlet for receiving the condensed ammonia-water stream,
   - an overhead section comprising:
      an outlet for withdrawing said overhead ammonia stream;
      an ammonia condensing unit arranged to receive said overhead ammonia stream and a cooling medium, such as water, for generating a condensed overhead ammonia stream;
      a separation unit, suitably an ammonia recovery drum, arranged to receive said condensed overhead ammonia stream, said separation unit comprising an outlet for withdrawing an ammonia liquid fraction, and an outlet for withdrawing said overhead ammonia gas stream;
      a reflux pump arranged to receive said ammonia liquid fraction and direct a portion thereof as overhead reflux stream to said overhead section;
      means for withdrawing the remaining portion of said ammonia liquid fraction as said ammonia liquid stream.

The term "reboiling unit" may be used interchangeably with the term "reboiler".

The term "ammonia condensing unit" may be used interchangeably with the term "ammonia condenser".

The term "power-driven heating device" means a heating element powered by electricity, which thus converts electricity or electrical energy into heat e.g. via the process of Joule heating.

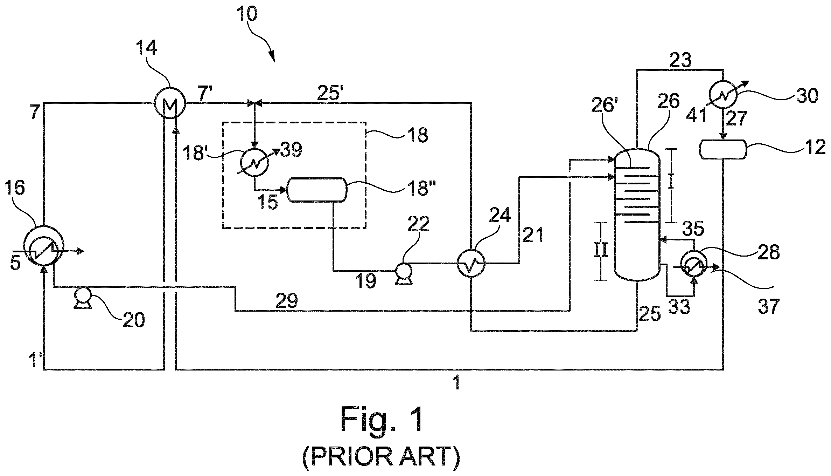

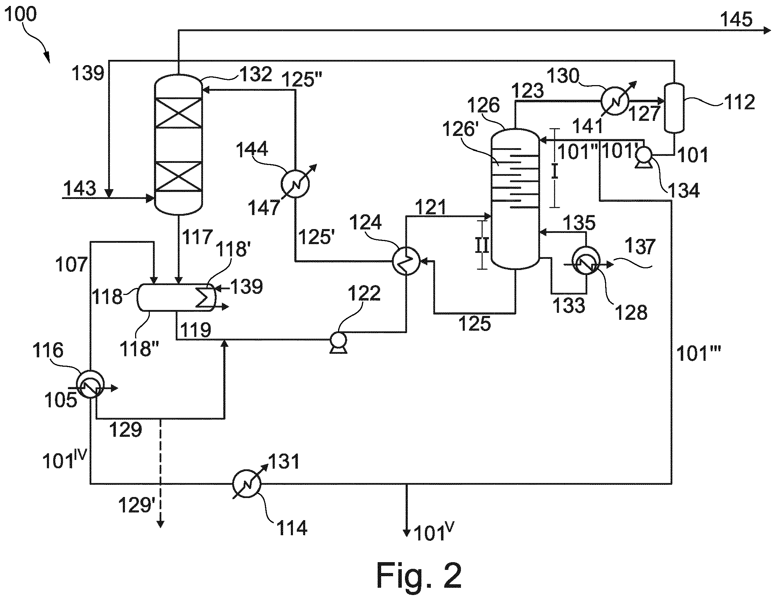

Thereby, contrary to traditional system for absorption of ammonia, as e.g. illustrated in appended Fig. 1, by which an ammonia-water mixture is sent to a distillation column where overhead ammonia is condensed and used for chilling in the ammonia evaporator (chiller), thus with no overhead reflux, while the bottom product relatively rich in water is used in the absorber, the present invention as e.g. illustrated in Fig. 2 provides for an overhead reflux thus enabling a distillation column with lower number of trays, and the same time the purified water stream from the bottom of the distillation column is utilized as scrubbing agent (e.g. absorbing agent) in the off-gas cleaning unit.

Traditional systems for absorption of ammonia also require the addition of significant amounts of demineralized water, whereas the present invention significantly reduces such requirement.

In an embodiment according to the first aspect of the invention, the ammonia synthesis plant further comprises upstream said ammonia cooling system one or more steam boilers arranged to receive said ammonia product gas stream, for recovering heat therefrom and producing steam, and wherein the plant is further arranged for providing at least a portion of said steam as the heat exchanging medium to said reboiling unit i.e. reboiler.

The reboiler, as is well-known in the art, is a heat exchanger, for instance a tube-and-shell heat exchanger, which provides the heat required to boil the liquid from the bottom of the regenerator, the regenerator suitably being a distillation column, in order to generate vapor which is returned to the distillation column to drive the separation of ammonia.

Thereby, by the present invention, the load of the reboiler follows the load of ammonia production and hence there is also a balanced use of steam at any turn down level, particularly well below 100%, for instance 10% i.e. where the load of the ammonia synthesis plant is 10%. In other words, it is now possible to further balance the steam produced in the ammonia synthesis plant with the steam used in the ammonia cooling system at any operating load between e.g.10-100%.

Steam generated in the ammonia synthesis plant may suitably be provided at a pressure level which fits that required in the reboiler, thereby also enabling a thermal efficiency which is at least as good as if mechanical refrigeration is utilized. Suitably the steam is medium pressure steam, for instance steam at 50 bar (at 264C).

In addition, when operating with low turn downs, such as turndowns below 50%, for instance 30% or 10%, the availability of external users of the steam generated in the ammonia synthesis is limited - if at all possible. The invention solves this issue also, again by linking the ammonia cooling system adapting absorption cooling with a dynamic ammonia synthesis gas plant, such as a green ammonia synthesis plant, having fluctuating ammonia and steam production.

Furthermore, the invention obviates the use of the steam turbine connected to the operation of a traditional ammonia refrigeration circuit. More specifically there is no steam turbine, as there is no centrifugal compressor in the ammonia cooling system and which is normally driven by such steam turbine.

Instead of the reboiler, or in combination with the reboiler, a power-driven heating device is provided. This heating device is suitably adapted within the regenerator at its bottom portion. Thereby, higher flexibility is achieved, as the electricity required for the heating device may be provided by renewable sources, as described before, and if for some reason the reboiler requirements of steam cannot be met, the power-driven heating device delivers the required heat in the regenerator. In addition, under transient conditions such as under start-up conditions, the regenerator may only operate with the heating device driven by electricity. ,

In an embodiment according to a first aspect of the invention, in said ammonia cooling system said ammonia evaporator further comprises an outlet for withdrawing a purge ammonia stream, and said ammonia cooling system further comprises means upstream said regeneration unit, such as juncture or mixing unit, for combining said purge ammonia stream with said condensed ammonia-water stream.

The provision of the outlet for withdrawing the purge ammonia stream, i.e. liquid blow down, eliminates the accumulation of water within the chiller.

Suitably, an ammonia recovery circulation pumps leads the combined stream to the regeneration unit.

By way of example, the condensed ammonia-water stream e.g. after adding the purge stream from the chilller is a stream containing 30-50 wt% ammonia, for instance 35, 40, 45 wt% ammonia, with the balance being water.

In a traditional system, as e.g. illustrated in Fig. 1, the purge ammonia stream from the chiller is sent directly to the distillation column. By combining the purge ammonia stream with the condensed ammonia-water stream, as in the present invention, a single pump is used for feeding ammonia-water to the regenerator, thereby increasing energy efficiency. The purge stream from the ammonia evaporator contains water as well as ammonia which is thereby recovered, instead of being disposed of as sour water or similar.

In an embodiment according to the first aspect of the invention, said ammonia cooling system further comprises:
a heat exchanger, hereinafter also referred to as after-cooler, upstream said ammonia evaporator and which is arranged to receive said ammonia liquid stream and to receive a cooling medium such as water as heat exchanging medium, for cooling said ammonia liquid stream prior to entering the ammonia evaporator.

In an embodiment according to the first aspect of the invention, said regeneration unit of said ammonia cooling system further comprises a feed/effluent heat exchanger (F/E HEX) which is arranged to receive said condensed ammonia-water stream or the stream resulting from combining the purge ammonia stream with said condensed ammonia-water stream, as well as for receiving said purified water stream as heat exchanging medium, for pre-heating the condensed ammonia-water stream, or preheating said stream resulting from combining the purge ammonia stream with said condensed ammonia-water stream, prior to entering the regeneration unit.

Suitably, the thus cooled purified water stream is further cooled in an additional heat exchanger, hereinafter also referred to as ammonia recovery cooler. Hence, this additional unit is suitably arranged to receive said purified water stream, and a cooling medium such as water as heat exchanging medium, for further cooling said purified water stream prior to entering the off-gas cleaning unit.

The provision of the F/E HEX and suitably also the ammonia recovery cooler enable maintaining an energy efficiency which at least matches that obtained if mechanical refrigeration was used instead, where such heat exchangers normally are not necessary.

In an embodiment according to the first aspect of the invention, the ammonia cooling system further comprises a conduit for withdrawing from said purge ammonia stream, or from said ammonia liquid stream, a portion therefrom as additional ammonia product, suitable for export as excess ammonia product.

Suitably, the remaining portion of said ammonia liquid fraction in the overhead section of the regeneration unit is withdrawn as said ammonia liquid stream.

While known (conventional) ammonia refrigeration circuits using ammonia absorption generate overhead ammonia from the regenerator, which is then condensed, collected in an overhead drum and then used for chilling, and the bottom stream of the regenerator which is relatively rich in water is then used for absorption as recycle stream (see e.g. Fig. 1), the present invention enables that the overhead ammonia stream from the regenerator which is then condensed and collected in the overhead drum, may not only be used for chilling i.e. in the ammonia evaporator, but also as part of the ammonia product pool - and all this while at the same time mitigating the issues related to load variations and thereby turndowns below 100% of particularly green ammonia synthesis plants (see Fig. 2).

Furthermore, while a traditional ammonia refrigeration circuit using ammonia absorption produces in the regenerator a bottom stream rich in water, typically about 25 wt% ammonia, 75% water, and which is recycled to the absorber by combining it with the ammonia vapor stream from the ammonia chiller, by the present invention, the purified water bottom stream from the regenerator according to the present invention, having much more than 75% water, such as at least 99%, i.e. pure water, is advantageously used in the off-gas scrubber, thus avoiding the need to resort to external sources of pure water, such as by using demineralized water.

In a second aspect, the invention relates to a process for producing an ammonia product gas from an ammonia synthesis gas stream comprising hydrogen and nitrogen, said process also producing an off-gas ammonia stream, the process comprising the steps:
a) optional electrolysis of water or steam for producing said hydrogen; said electrolysis suitably being powered by electricity from renewable energy sources such as solar, wind or hydropower;
b) converting the ammonia synthesis gas into said ammonia product gas in an ammonia synthesis converter;
   the process further comprising the cooling of the ammonia product gas according to the steps:
c) evaporating an ammonia liquid stream in an ammonia evaporator for generating an ammonia vapor stream under the provision of said ammonia product gas as heat exchanging medium;
d) supplying said off-gas ammonia stream to an off-gas cleaning unit under the addition of a purified water stream as scrubbing agent (absorbing agent) for generating a water stream and an ammonia depleted off-gas stream;
e) withdrawing from said off-gas cleaning unit said water stream and supplying it, together with said ammonia vapor stream, to an absorption cooling unit under the provision of a cooling medium, such as water, for generating and collecting a condensed ammonia-water stream;
f) withdrawing said condensed ammonia-water stream from said absorption cooling unit and supplying it to a regeneration unit, such as distillation column, for generating: said ammonia liquid stream, an overhead ammonia gas stream and a purified water stream.

Thereby, as in connection with the first aspect of the invention, absorption cooling is combined with off-gas absorption resulting in a much simpler process layout with a considerably lower number of equipment units and thereby fewer process steps than in a traditional compressor driven ammonia cooling circuit plus a traditional off-gas absorption unit. A high process and plant integration is thereby achieved.

The provision of absorption cooling - rather than the traditional and normally more efficient compressor driven ammonia cooling (mechanical refrigeration) in a process for ammonia production operating at widely different loads and fast load changes, such as green ammonia plants operating solely on renewable energy sources - turns out to provide a better turn-town ratio than available in mechanical refrigeration and so follow the general plant variations.

In an embodiment according to the second aspect of the invention, the process further comprises:
g) supplying to said off-gas cleaning unit, said overhead ammonia gas stream.

Slips streams in the process and plant containing ammonia, such as the off-gas ammonia stream generated upstream to avoid building-up inerts during the conversion of the ammonia synthesis gas into the ammonia product gas, as well as now also the overhead ammonia gas stream formed in the regeneration unit, are advantageously treated in the off-gas cleaning unit. This also relieves an end user of the burden of finding ways of treating the overhead ammonia stream.

In an embodiment according to the second aspect of the invention, prior to step c) said ammonia product gas is first cooled by conducting it through one or more steam boilers, for generating steam, suitably medium pressure steam; and in said step f) the regeneration unit comprises a power-driven heating device or a reboiling unit, and the process further comprises supplying said steam to said reboiling unit.

It has been found that when the cooling of the ammonia product gas is traditionally provided by a multistage cooling compressor operating on several pressure levels, the ammonia cooling may be provided with a high energy efficiency at high loads, yet at low loads a complicated process and plant layout results due to compressor limitations including also a low efficiency at low loads. This is a problem if the plant load varies significantly and the compressor is steam driven. At full plant load steam produced as a by-product in the ammonia plant will be produced in sufficient quantities to run the compressor for the ammonia cooling compressor, whereas at reduced load this is not possible.

Now, by the present invention, the steam produced can be tuned to the steam needed, for instance for use as heat exchanging medium in the reboiler of the regenerator. The use of a steam turbine otherwise required in a compressor driven cooling, is avoided. Furthermore, by providing the power-driven heating device, which is suitably adapted within the regenerator at its bottom portion, higher flexibility is achieved in the process. The electricity required for the heating device may be provided by renewable sources and if for some reason the reboiler requirements of steam cannot be met, the power-driven heating device delivers the required heat in the regenerator. In addition, as in connection with the first aspect of the invention, under transient conditions such as under start-up conditions, the regenerator may only operate with the heating device driven by electricity.

In an embodiment according to the second aspect of the invention, in step c) a purge ammonia stream (liquid blow down) is generated and the process further comprises withdrawing said purge ammonia stream and combining it with said condensed ammonia-water stream.

The purge stream from the ammonia evaporator contains water as well as ammonia which is thereby recovered, instead of being disposed of as sour water or similar. Furthermore, withdrawing the purge ammonia stream eliminates the accumulation of water within the chiller.

In an embodiment according to the second aspect of the invention, the process further comprises diverting a portion of said ammonia liquid stream or said purge ammonia stream (i.e. the liquid blowdown from the chiller), as an additional ammonia product. Any of the streams is thereby utilized as export of excess ammonia.

The process enables thereby, not only the cooling of the ammonia product gas, but also the generation of additional valuable ammonia product, instead of simply having a closed ammonia cooling circuit. For instance, the ammonia liquid stream of which a portion is diverted as additional ammonia product, has a purity of at least 99.5 wt % NH₃.

It would be understood, that any of the embodiments and associated benefits according to the first aspect of the invention, may be used with the second aspect of the invention, and vice versa.

Fig. 1 shows an ammonia cooling system according to the prior art, more specifically and ammonia refrigeration circuit with absorption cooling according to the prior art.

Fig. 2 shows an ammonia cooling system with absorption cooling according to an embodiment of the present invention.

With reference to both figures, absorption cooling is utilized in the ammonia refrigeration circuit. The basic principle is absorption of ammonia vapor from an ammonia chiller in a liquid ammonia/water mixture where the absorption heat is removed using water cooling. The resulting condensed ammonia/water mixture is pumped to a regenerator (distillation column), where the overhead ammonia is condensed and used for the chilling (Fig. 1, 2) and optionally also as additional ammonia product (Fig. 2), while the bottom product from the regenerator is used directly in the ammonia absorption (Fig. 1), or as a pure water stream in an off-gas cleaning unit (Fig. 2).

With specific reference to Fig. 1 in accordance with the prior art, an ammonia cooling circuit 10 is shown. An ammonia liquid stream 1 from ammonia recovery drum 12 passes to a first exchanger 14 upstream ammonia evaporator (chiller) 16 and using ammonia vapor stream 7 as heat exchanging medium. The resulting ammonia liquid stream 1' is then evaporated in the chiller 16 using ammonia product gas 5 from the ammonia synthesis converter of an ammonia synthesis plant (not shown), thereby generating the ammonia vapor stream 7. After providing for cooling in heat exchanger 14, the ammonia vapor stream 7' is combined with bottom stream 25' rich in water, e.g. 25 wt% ammonia/75wt% water, from regenerator (distillation column) 26 having arranged in its upper section I a number of trays 26'. The combined ammonia-water stream is then conducted to an absorber 18 comprising a cooling unit 18' and mixing vessel 18". Cooling water 39 in cooling device 18' removes absorption heat, thereby generating a condensed ammonia-water stream 15 which is fed to a mixing vessel 18". A condensed ammonia-water stream 19 is withdrawn from the mixing vessel 18", transported via pump 22 and heated by heat exchanger 24 using the bottom stream 25 from the regenerator 26 as heat exchanging medium, and fed as stream 21 to the regenerator 26. A purge ammonia stream (liquid blow down) 29 is transported via a separate pump 20 to the top of regenerator 26.

The regenerator 26 comprises an upper section I and lower section II. In the lower section there is provided a reboiler 28 which boils the bottoms liquid 33 and generates a vapor 35 for driving the distillation separation. The reboiler 28 is driven normally by steam 37 generated in a steam turbine (not shown). An overhead ammonia stream 23 is withdrawn and conducted to ammonia condenser 30 using a cooling medium 41 such as water. The thus condensed ammonia stream 27 is conducted to ammonia recovery drum 12 from which said ammonia liquid stream 1 is withdrawn, thereby closing the ammonia cooling circuit.

If for the same duty mechanical refrigeration is used, a centrifugal compressor driven by a condensing steam turbine would be required. The compressor will then replace the units: heat exchanger 14, absorber 18 comprising cooling unit 18' and mixing vessel 18", heat exchanger 24, reboiler 28, regenerator 26, pump 22, pump 20.

By the present invention, in a chiller treating almost pure ammonia, ammonia vapors boil off at low pressure, thereby cooling and partly condensing the ammonia product gas, optionally ammonia synthesis gas, on the tube side. The ammonia vapors are routed to the absorber, suitably a mixing vessel containing mostly water and absorbed in the water. The condensed ammonia-water mixture is then sent to the regeneration unit, suitably a distillation column. The pure ammonia, i.e. more than 99 wt% ammonia, such as 99.5 wt% or higher, is recycled as the ammonia liquid stream to the chiller. Export of excess ammonia is suitably also taken from the chiller purge stream, i.e. the liquid blow down from the chiller. The purified water from the regenerator is routed to the off-gas cleaning unit thereby removing ammonia in the off-gas to insignificantly levels, such as less than 10 ppmv ammonia. From the bottom of the off-gas cleaning unit, the water is routed to the mixing vessel.

Accordingly, now with specific reference to Fig. 2 in accordance with an embodiment of the present invention, an ammonia cooling system 100 is shown. An ammonia liquid stream 101'" diverted from overhead reflux stream 101' in downstream regenerator 126, passes to heat exchanger 114 (after-cooler, using e.g. cooling water 131 as heat exchanging medium) and arranged upstream ammonia evaporator (chiller) 116. The thus cooled ammonia liquid stream 101^{iv} is then evaporated in the chiller 116 using ammonia product gas 105 from the ammonia synthesis converter of an ammonia synthesis plant (not shown). Thereby ammonia vapor stream 107 is generated which is then conducted to an absorber 118 comprising a cooling unit 118' and mixing vessel 118". Cooling water 139 in cooling device 118' removes absorption heat, thereby generating a condensed ammonia-water stream 119 which is withdrawn from the mixing vessel 118" and transported via pump 122, heated by feed/effluent heat exchanger 124 using the bottom stream 125 from the regenerator 126 as heat exchanging medium, and fed as stream 121 to the regenerator 126. The thus cooled purified water stream 125' is further cooled into stream 125" in ammonia recovery cooler 144 using e.g. cooling water 147. A purge ammonia stream (liquid blow down) 129 is suitably combined with condensed ammonia-water stream 119 from the absorber 118 prior to being transported via pump 122 to the regenerator 126. Export of excess ammonia 129' is suitably also taken from the chiller purge stream 129.

The regenerator 126 comprises an upper section I which includes a number of trays 126', and lower section II. In the lower section there is provided a reboiler 128 which boils the bottoms liquid 133 and generates a vapor 135 for driving the distillation separation. The reboiler 128 is driven by steam 137, which is suitably generated in steam boilers for cooling ammonia product gas leaving an ammonia converter, thus supplying the ammonia product gas 105. The lower section II of regenerator 126 may also be provided with a power-driven heating device (not shown), which is for instance adapted at the bottom of the column. The upper section I comprises and overhead section: an overhead ammonia stream 123 is withdrawn and conducted to ammonia condenser 130 using a cooling medium 141 such as water. The thus condensed overhead ammonia stream 127 is conducted to separation unit 112, suitably an ammonia recovery drum, from which ammonia liquid fraction 101 is withdrawn, as well as overhead ammonia gas stream 139. A reflux pump 134 is arranged to transport the ammonia liquid fraction 101, 101' and direct a portion thereof as overhead reflux stream 101" to the overhead section of the regenerator 126. The remaining portion of said ammonia liquid fraction is diverted as ammonia liquid stream 101"'.

In the lower section II of regenerator 126, the reboiler 128 is driven by steam 137 generated in one or more steam boilers (not shown) recovering heat from the ammonia product gas stream. Thereby it is possible to balance the steam produced in the ammonia synthesis plant e.g. in the upstream ammonia synthesis loop thereof, with the steam used in the ammonia cooling system 100 at any operating load - or correspondingly at any turndown- between 10-100%. No steam turbine is required. Furthermore, from the separation unit 112 in the overhead section of the regenerator 126, apart from the ammonia liquid stream 101‴, 101^{iv} used in the ammonia chiller 16, a stream 101^{v} may be derived which is used as additional product ammonia, e.g. as export of excess ammonia.

Further, instead of recycling the bottom stream 25 from the regenerator 26 to the absorber 18 of Fig. 1, the bottom purified water stream 125, 125', 125" containing at least 99 wt% water, for instance as pure water having 99.98 mole% H₂O or more, such as 100 mole % H₂O with NH₃ being less than 50 pppmv, is conducted to off-gas cleaning unit 132 for removing ammonia from an off-gas ammonia stream 143 produced in the ammonia synthesis plant, suitably together with overhead ammonia gas stream 139. The purified water stream 125" is therefore used as the scrubbing agent. From the off-gas cleaning unit 132, e.g. an off-gas scrubber, a water stream 117 is withdrawn as bottom stream, which is then sent to absorber 118 together with ammonia vapor stream 107 from chiller 116. From the off-gas cleaning unit 132 a clean off-gas stream, i.e. an ammonia depleted off-gas stream 145 having less than 10 ppmv NH₃, for instance 7 ppmv or less, is withdrawn.

## Claims

1. Ammonia synthesis plant comprising an ammonia synthesis converter and a downstream ammonia cooling system (100), wherein said ammonia synthesis converter is arranged to receive an ammonia synthesis gas comprising hydrogen and nitrogen and to produce an ammonia product gas stream (105), wherein said ammonia synthesis plant is arranged to generate an off-gas ammonia stream (143), and wherein said ammonia cooling system (100) comprises:
- an ammonia evaporator (116) for evaporating an ammonia liquid stream (101, 101', 101"', 101^{iv}) and generating an ammonia vapor stream (107);
- an off-gas cleaning unit (132) for cleaning said off-gas ammonia stream (143) under the addition of water as a scrubbing agent, generating a water stream (117) and an ammonia depleted off-gas stream (145);
- an absorption cooling unit (118) comprising water for cooling said ammonia vapor stream (107) and collecting a condensed ammonia-water stream (119);
- a regeneration unit (126) for generating from said condensed ammonia-water stream (119, 121):
a purified water stream (125, 125', 125"),
said ammonia liquid stream (101, 101', 101'", 101^{iv}), and
an overhead ammonia gas stream (139).

2. Ammonia synthesis plant according to claim 1, comprising a water or steam electrolysis unit for producing said hydrogen, and said electrolysis unit is powered by electricity from renewable energy sources such as solar, wind or hydropower.

3. Ammonia synthesis plant according to any of claims 1-2, wherein in said ammonia cooling system (100):
- said ammonia evaporator (116) is arranged to receive said ammonia liquid stream (101, 101', 101'", 101^{iv}) and a heat exchanging medium (105) for evaporating said ammonia liquid stream (101, 101', 101‴, 101^{iv}), thereby generating said ammonia vapor stream (107);
- said off-gas cleaning unit (132) is suitably an off-gas scrubbing unit arranged to receive: said purified water stream (125, 125', 125") from said regeneration unit as the scrubbing agent and said off-gas ammonia stream (143), suitably also comprising said overhead ammonia gas stream (139) from said regeneration unit (126), thereby generating said ammonia depleted off-gas stream (145) and said water stream (117);
- said absorption cooling unit (118) is suitably a mixing vessel (118") containing water, arranged to receive said water stream (117) and said ammonia vapor stream (107), for thereby generating and collecting said condensed ammonia-water stream (119); said absorption cooling unit further comprising a cooling device (118') such as a coil arranged to receive a cooling medium (139) such as water, and an outlet for withdrawing said condensed ammonia-water stream (119);
- said regeneration unit (126) is a distillation column arranged to receive said condensed ammonia-water stream (119, 121), and said regeneration unit (126) comprising: an outlet for withdrawing as a bottom stream said purified water stream (125), an outlet for withdrawing an overhead ammonia stream (123) and a separation unit (112) for separating from said overhead ammonia stream (123) said overhead ammonia gas stream (139) and said ammonia liquid stream (101).

4. The ammonia synthesis plant of any of claims 1-3, wherein said ammonia cooling system (100) further comprises means such as a juncture or mixing unit for add-mixing said overhead ammonia gas stream (139) to said off-gas ammonia stream (143).

5. The ammonia synthesis plant of any of claims 3-4, wherein in said ammonia cooling system (100) the heat exchanging medium of the ammonia evaporator (116) is said ammonia product gas stream (105).

6. The ammonia synthesis plant of any of claims 1-5, wherein in said ammonia cooling system (100), said regeneration unit (126) comprises an upper section (I) and a lower section (II);
said lower section (II) comprising:
a power-driven heating device and/or a reboiling unit (128) arranged to receive a heat exchanging medium (137); and
an outlet for withdrawing as bottom stream said purified water stream (125);
said upper section (I) comprising:
- an inlet for receiving the condensed ammonia-water stream (119, 121),
- an overhead section comprising:
an outlet for withdrawing said overhead ammonia stream (123);
an ammonia condensing unit (130) arranged to receive said overhead ammonia stream (123) and a cooling medium (141), such as water, for generating a condensed overhead ammonia stream (127);
separation unit (112), suitably an ammonia recovery drum, arranged to receive said condensed overhead ammonia stream (127), said separation unit (112) comprising an outlet for withdrawing an ammonia liquid fraction (101), and an outlet for withdrawing said overhead ammonia gas stream (139);
a reflux pump (134) arranged to receive said ammonia liquid fraction (101) and direct a portion thereof as overhead reflux stream (101") to said overhead section;
means for withdrawing the remaining portion of said ammonia liquid fraction as said ammonia liquid stream (101"').

7. The ammonia synthesis plant of claim 6, further comprising upstream said ammonia cooling system (100) one or more steam boilers arranged to receive said ammonia product gas stream (105), for recovering heat therefrom and producing steam, and wherein the plant is further arranged for providing at least a portion of said steam as the heat exchanging medium (137) to said reboiling unit (128).

8. The ammonia synthesis plant of any of claims 1-7, wherein in said ammonia cooling system (100), said ammonia evaporator (116) further comprises an outlet for withdrawing a purge ammonia stream (129), and said ammonia cooling system (100) further comprises means upstream said regeneration unit (126), such as juncture or mixing unit, for combining said purge ammonia stream (129) with said condensed ammonia-water stream (119).

9. The ammonia synthesis plant of any of claims 1-8, wherein said regeneration unit (126) of said ammonia cooling system (100) further comprises a feed/effluent heat exchanger (F/E HEX) 124 which is arranged to receive said condensed ammonia-water stream (119) or the stream (121) resulting from combining the purge ammonia stream (129) with said condensed ammonia-water stream (119), as well as for receiving said purified water stream (125) as heat exchanging medium, for pre-heating the condensed ammonia-water stream (119), or preheating said stream (121) resulting from combining the purge ammonia stream (129) with said condensed ammonia-water stream (119), prior to entering the regeneration unit (126).

10. The ammonia synthesis plant of any of claims 1-9, wherein the ammonia cooling system (100) further comprises a conduit for withdrawing from said purge ammonia stream (129), or from said ammonia liquid stream (101"'), a portion therefrom as additional ammonia product (129', 101^{v}), suitable for export as excess ammonia product.

11. Process for producing an ammonia product gas (105) from an ammonia synthesis gas stream comprising hydrogen and nitrogen, said process also producing an off-gas ammonia stream (143), the process comprising the steps:
a) optional electrolysis of water or steam for producing said hydrogen; said electrolysis suitably being powered by electricity from renewable energy sources such as solar, wind or hydropower;
b) converting the ammonia synthesis gas into said ammonia product gas (105) in an ammonia synthesis converter;
the process further comprising the cooling of the ammonia product gas according to the steps:
c) evaporating an ammonia liquid stream (101, 101', 101'", 101^{iv}) in an ammonia evaporator (116) for generating an ammonia vapor stream (107) under the provision of said ammonia product gas (105) as heat exchanging medium;
d) supplying said off-gas ammonia stream (143) to an off-gas cleaning unit (132) under the addition of a purified water stream (125, 125', 125") as scrubbing agent for generating a water stream (117) and an ammonia depleted off-gas stream (145);
e) withdrawing from said off-gas cleaning unit (132) said water stream (117) and supplying it, together with said ammonia vapor stream (107), to an absorption cooling unit (118) under the provision of a cooling medium (139), such as water, for generating and collecting a condensed ammonia-water stream (119);
f) withdrawing said condensed ammonia-water stream (119) from said absorption cooling unit (118) and supplying it to a regeneration unit (126), for generating: said ammonia liquid stream (101, 101', 101'", 101^{iv}), an overhead ammonia gas stream (139) and a purified water stream (125).

12. Process according to claim 11, further comprising:
g) supplying to said off-gas cleaning unit (132): said overhead ammonia gas stream (139).

13. Process according to any of claims 11-12, wherein prior to step c) said ammonia product gas (105) is first cooled by conducting it through one or more steam boilers, for generating steam; and wherein in said step f) the regeneration unit (126) comprises a power-driven heating device or a reboiling unit (128), and the process further comprises supplying said steam (137) to said reboiling unit (128).

14. Process according to any of claims 11-13, where in step c) a purge ammonia stream (129) is generated, and the process further comprises withdrawing said purge ammonia stream (129) and combining it with said condensed ammonia-water stream (119).

15. Process according to any of claims 11-14, wherein the process further comprises diverting a portion of said ammonia liquid stream (101"') or said purge ammonia stream (129), as an additional ammonia product (101^{v}, 129').
